# EUROPÄISCHE PATENTSCHRIFT

(11) **EP 0 968 675 B1**
(45) Veröffentlichungstag und Bekanntmachung des Hinweises auf die Patenterteilung: **29.01.2003**
(21) Anmeldenummer: 99109984.7
(22) Anmeldetag: 21.05.1999
(51) Int. Cl.: A47C 20/04, A47C 19/02

(54) **Elektromotorischer Möbelantrieb**
Electrically acuated drive for furniture
Entraînement pour meubles avec un électromoteur

(30) Priorität: 29.06.1998 DE 29811566 U
(43) Veröffentlichungstag der Anmeldung: 05.01.2000
(73) Patentinhaber: Dewert Antriebs- und Systemtechnik GmbH & Co. KG, D-32278 Kirchlengern (DE)
(72) Erfinder: Bokämper, Ralf, 32312 Lübbecke (DE); Roither, Andreas, Dipl.-Ing., 33729 Bielefeld (DE)
(74) Vertreter: Loesenbeck, Karl-Otto, Dipl.-Ing.

(56) Entgegenhaltungen:
- EP-A- 0 146 914
- EP-A- 0 201 976
- DE-A- 3 104 485
- DE-A1- 3 104 484
- DE-A1- 3 104 486

## Beschreibung

Die vorliegende Erfindung bezieht sich auf einen elektromotorischen Möbelantrieb in Form eines Einzel- oder Doppelantriebes insbesondere für Möbel des Krankenhausund/oder des Pflegebereiches mit ein oder zwei jeweils von einem ein Schneckenrad aufweisenden Antrieb antreibbaren Stellspindel, auf die jeweils eine Spindelmutter aufgesetzt ist, die mit einem auf eine Welle eines verstellbaren Möbelteiles drehfest aufgesetzten Anlenkhebel zusammenwirkt, bei dem die antriebstechnische Verbindung zwischen dem Abtriebszapfen des Antriebes und der Stellspindel ausrückbar ist.

Der in Frage kommende elektromotorische Möbelantrieb wird für Möbel unterschiedlichster Art, insbesondere jedoch für Betten, Lattenroste und dergleichen verwendet. Im Normalfall erfolgt die auf- oder abwärts gerichtete Verstellbewegung des Möbelbauteiles bei eingeschaltetem elektromotorischen Möbelantrieb mit relativ geringer Geschwindigkeit. Insbesondere im Krankenhaus und im Pflegebereich werden jedoch besondere Anforderungen gestellt. So soll das zu verstellende Möbelbauteil auch mit wesentlich höherer Geschwindigkeit abwärts verstellt werden können. Dazu gibt es verschiedene Möglichkeiten der mechanischen Ausrückbarkeit des Antriebszuges zwischen den Abtriebszapfen des Antriebes der Stellspindel.

Bei einem bekannten Möbelantrieb ist auf den Abtriebszapfen des Antriebes eine erste Kupplungsscheibe drehfest aufgesetzt. Auf das zugeordnete Ende der Steilspindel ist eine zweite Kupplungsscheibe verdrehsicher aufgekeilt. Die beiden Kupplungsscheiben können durch eine in axialer Richtung verfahrbare Kupplungstrommel in eine Mitnahmeverbindung gebracht werden. Die auf den Abtriebszapfen des Antriebes aufgesetzte Kupplungsscheibe und die Kupplungstrommel sind mit Verzahnungen versehen, deren Zähne asymmetrisch gestaltet sind, so daß bei einer aufwärts gerichteten Verstellbewegung eines Möbelbauteiles mittels des Antriebes die Kupplungstrommel durch die erste Kupplungsscheibe synchron angetrieben wird und bei einer gleichsinnigen Verstellbewegung des Möbelbauteiles von Hand die Kupplungstrommel bei Stillstand der ersten Kupplungsscheibe eine Drehung ausführt.

Nachteilig ist bei dieser an sich bewährten Ausführung, daß eine verhältnismäßig große Anzahl von Bauteilen notwendig ist, um die Möglichkeit der Ausrückbarkeit zu schaffen. Außerdem übergreift die Kupplungstrommel die zweite Kupplungsscheibe. Dadurch werden die Abmessungen des Antriebes verhältnismäßig groß. Die in Frage kommenden Möbelantriebe werden in großen Stückzahlen vertrieben. Die in Frage kommenden Möbelantriebe sollen deshalb auch kostengünstig herstellbar sein.

Der Erfindung liegt die Aufgabe zugrunde, einen elektromotorischen Möbenantrieb der eingangs näher beschriebenen Art in konstruktiv einfacher Weise so zu gestalten, daß bei einer kompakten Bauweise die Anzahl der die Ausrückbarkeit ermöglichenden Bauteile reduziert wird.

Die gestellte Aufgabe wird gelöst, indem das Schneckenrad des Antriebes drehbar auf einem auf der Stellspindel fest angeordneten Führungskörper gelagert ist, auf dem ein Kupplungsrad drehfest, jedoch axial verschiebbar angeordnet ist, welches mit dem Schneckenrad in eine Eingriffs- und in eine Außereingriffsstellung bringbar ist.

Bei dem erfindungsgemäßen Möbelantrieb wird das Schneckenrad so gestaltet, daß im Normalbetriebszustand die Antriebsverbindung zur Stellspindel vom Schneckenrad aus über die Kupplungsscheibe und den Führungskörper übertragen wird. Soll jedoch die abwärts gerichtete Bewegung in kürzester Zeit mit einer entsprechend hohen Absenkgeschwindigkeit erfolgen, wird die Kupplungsscheibe außer Eingriff mit dem Schneckenrad gebracht. Die Stellspindel sowie der Führungskörper und die Kupplungsscheibe drehen sich dann bei stillstehendem Schneckenrad bzw. bei stillstehendem Antrieb.

Durch die erfindungsgemäße Gestaltung werden die Abmessungen des Möbelantriebes gegenüber Antrieben ohne Ausrückbarkeit, wenn überhaupt, nur unwesentlich geändert.

Zur Koppelung des Schneckenrades mit dem Kupplungsrad ist vorgesehen, daß das Schneckenrad an der dem Kupplungsrad zugewandten Seite eine kreisringförmige Verzahnung und das Kupplungsrad an der zugeordneten Seite eine entsprechende Gegenverzahnung aufweist. Dadurch wird eine schlupffreie und hoch belastbare Verbindung geschaffen. Dabei ist es dann zweckmäßig, wenn die Zähne der Verzahnungen sägezahnförmig gestaltet sind und jeder Zahn aus einer gegenüber den Drehachsen steilen und einer flachen Flanke begrenzt ist. Im Normalbetriebszustand wird bei einer Aufwärtsbewegung eines Möbelteiles das Drehmoment über die steilen Flanken der Verzahnungen des Schneckenrades und des Kupplungsrades übertragen. Diese Drehmomentübertragung erfolgt jedoch nur in der entsprechenden Drehrichtung. In der entgegengesetzten Drehrichtung, beispielsweise wenn das angeschlossene Möbelbauteil abgesenkt wird, dreht sich das Kupplungsrad aus dem Schneckenrad heraus und verschiebt sich dabei axial.

Ein mit einem Kraftspeicher ausgerüsteter Betätigungsmechanismus versucht dabei fortlaufend das Kupplungsrad gegen das Schneckenrad zu drücken. Soll jedoch das angeschlossene Bauteil mit erhöhter Geschwindigkeit abgesenkt werden, wird mittels dieser Betätigungseinrichtung das Kupplungsrad außer Eingriff mit dem Schneckenrad gebracht. Da der Spindeltrieb nicht selbsthemmend ist, dreht sich dieser jetzt unter der einwirkenden Last, die auf das Hubrohr wirkt. Der Spindeltrieb wird in diesem Falle nicht mehr durch den Schneckentrieb gebremst. Die Zähne der Verzahnungen sind zweckmäßigerweise sägezahnförmig gestaltet. Zweckmäßigerweise weist das Kupplungsrad am Außenumfang eine Aufnahme für ein Betätigungselement, für eine Handhabe oder dergleichen auf. Diese Aufnahme ist in einfachster Ausführung eine umlaufende Nut. Das Betätigungselement kann ein federbelasteter Ausrückhebel oder ein ähnliches Bauteil sein.

Damit der Hub der Spindelmutter nicht eingeschränkt wird, ist vorgesehen, daß die Kupplungsrad an der der Spindelmutter abgewandten Seite des Schneckenrades angeordnet ist.

Anhand der beiliegenden Zeichnung wird die Erfindung noch näher erläutert.

Es zeigen:
- Figur 1: einen erfindungsgemäßen elektromotorischen Möbelantrieb in Form eines Einzelantriebes in Schnittdarstellung,
- Figur 2: den mit zur Ausrückung des Antriebses mit einem Bowdenzug angeordneten Möbelantrieb in einer Ansicht,
- Figur 3: den zur Ausrückung mit einem Ausrückhebel ausgerüsteten Möbelantrieb in einer Ansicht,
- Figur 4: die übliche Verzahnung des mit dem Schneckenrad in Eingriff stehenden Kupplungsrades,
- Figur 5: die Verzahnung des Schneckenrades mit dem Kupplungsrad in einer bevorzugten Ausführungsform.

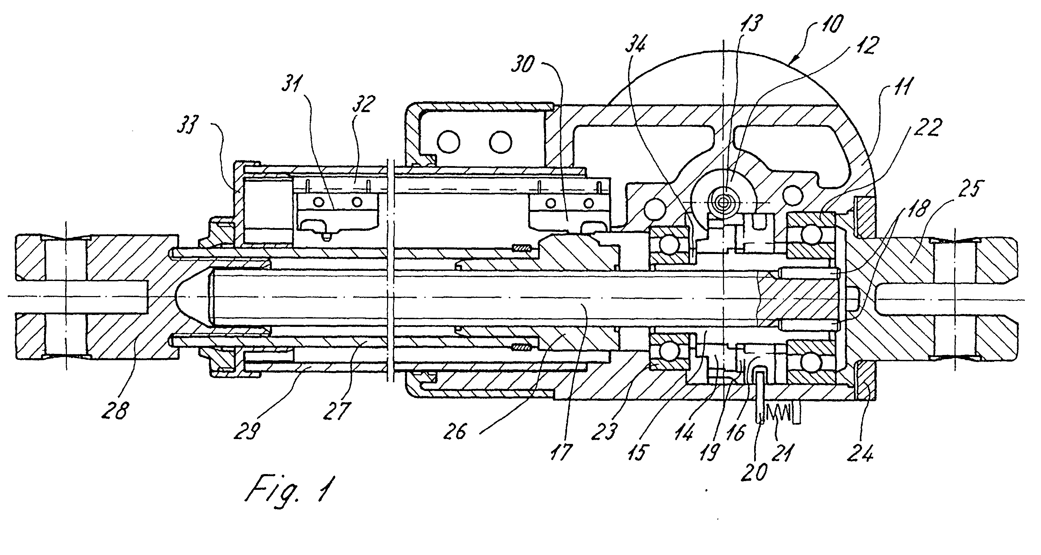

Der in der Figur 1 dargestellte elektromotorische Möbelantrieb 10 ist mit einem Gehäuse 11 ausgerüstet, in dem der nicht näher erläuterte Antrieb 12 installiert ist. Der Antrieb 12 treibt über eine Schnecke 13 ein Schneckenrad 14 an. Das Schneckenrad 14 ist frei drehbar auf einem Führungskörper 15 gelagert. Auf dem Führungskörper 15 ist außerdem ein Kupplungsrad 16 drehfest aufgesetzt, welches im Normalbetriebszustand mit dem Schneckenrad 14 in einer Mitnahmeverbindung steht. Der Führungskörper 15 ist drehfest auf eine Spindel 17 aufgesetzt. Dies erfolgt durch in axialer Richtung der Spindel 17 verlaufende Stifte 18. Die Mitnahmeverbindung zwischen dem Kupplungsrad 16 und dem Schneckenrad 14 erfolgt durch eine noch näher erläuterte Verzahnung 19.

Das Kupplungsrad 16 ist umfangsseitig mit einer umlaufenden Nut versehen, in die ein Ausrückelement in Form eines Ausrückhebels 20 eingreift. Dieser Ausrückhebel 20 ist durch eine Feder 21 derart belastet, daß im Normalzustand das Kupplungsrad 16 mit dem Schneckenrad 14 über die entsprechenden Verzahnungen 19 in Eingriff steht. Zur Lagerung der Spindel 17 sind auf die beiden Stirnenden des Führungskörpers 15 Rillenkugellager 22, 23 aufgesetzt. Dazu sind die Enden des Führungskörpers 15 abgesetzt. Das Gehäuse 11 des elektromotorischen Möbelantriebes 10 ist an der dem Führungskörper 15 zugeordneten Seite mittels eines Deckels 24 verschlossen. Durch eine zentrische Öffnung des Deckels 24 ragt ein Gabelkopf 25, um den elektromotorischen Möbelantrieb 10 in nicht näher dargestellter Weise aufzuhängen.

Auf die Spindel 17 ist eine Spindelmutter 26 aufgesetzt, die ein Hubrohr 27 trägt. Das dem Führungskörper 15 gegenüberliegende Ende des Hubrohres 27 trägt einen weiteren Gabelkopf 28, um beispielsweise den elektromotorischen Möbelantrieb 10 an einen Anlenkhebel anzuschließen, der mit dem zu verstellenden Möbelbauteil drehfest verbunden ist.

Der elektromotorische Möbelantrieb 10 ist außerdem in bekannter Weise mit einem Flanschrohr 29 ausgerüstet. Dieses Flanschrohr 29 hat an einer Seite eine rechteckförmige Ausweitung, in der zwei Endschalter 30, 31 angeordnet sind, um den Hub der Spindelmutter 26 einzustellen. Dazu sind die Endschalter 30, 31 auf einer als Lochleiste ausgebildeten Endschalterleiste 32 angeordnet. Das Flanschrohr 29 ist durch eine Endkappe 33 verschlossen. Zwischen dem der Spindelmutter 26 zugewandten Rillenkugellager 23 und dem Führungskörper 15 liegt noch eine Stützscheibe 34.

Wie die Figur zeigt, liegt das Kupplungsrad 16 an der der Spindelmutter 26 abgewandten Seite des Schneckenrades 14. Die miteinander in Eingriff stehenden Verzahnungen 19 liegen auf einem Ring. Die Zähne der Verzahnungen sind asymmetrisch nach Art von Sägezähnen ausgebildet, Demzufolge wird jeder Zahn von einer steilen, parallel oder annähernd parallel zu den Drehachsen des Schneckenrades 14 und des Kupplungsrades 16 stehenden Flanke und einer flachen Flanke begrenzt. Beim Einschalten des elektromotorischen Möbelantriebes zwecks Hochfahrens eines Möbelbauteiles erfolgt die Übertragung des Drehmomentes durch die steilen Flanken der Verzahnungen 19. Wird das Möbelbauteil bei eingeschaltetem elektromotorischen Möbelantrieb 10 abgesenkt und dabei beispielsweise durch ein Körperteil blockiert, dreht sich das Kupplungsrad 16 gegenüber dem Schneckenrad 14. Es verschiebt sich dabei entgegen der Wirkung der Feder 21 axial. wodurch sinngemäß ein Sicherheitsfreilauf gegeben ist. Soll jedoch das Möbelbauteil durch Ausrücken des Antriebes 14 mit wesentlich höherer Geschwindigkeit abgesenkt werden, wird durch Betätigung des Ausrückhebels 20 die Verzahnung des Kupplungsrades 16 außer Eingriff mit der Verzahnung des Schneckenrades 14 gebracht.

Da die Spindel 17 nicht selbsthemmend ist, kann sich diese ungebremst drehen.

Wesentlich ist bei dem erfindungsgemäßen Möbelantrieb die drehfeste Verbindung zwischen der Spindel 17 und dem Führungskörper 15 sowie das mit dem Schneckenrad 14 in Eingriff stehende Kupplungsrad 16.

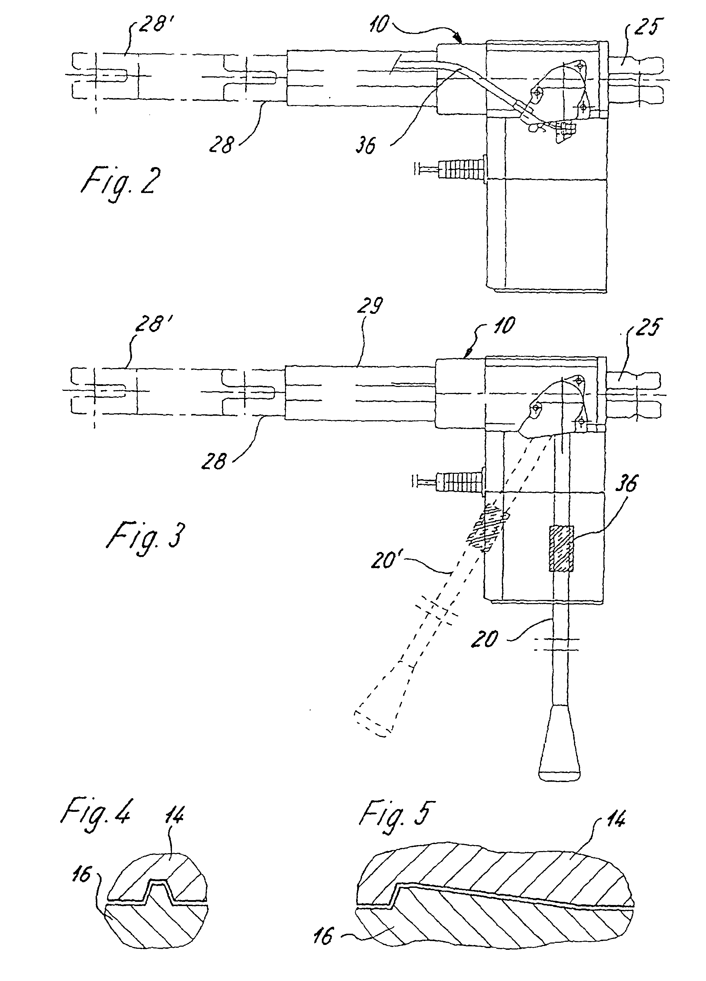

Die Figuren 2 und 3 zeigen den elektromotrischen Möbelantrieb 10 in zwei verschiedenen Versionen. Der wesentliche Unterschied liegt darin, daß für die Ausrückbarkeit des Möbelantriebes nach der Figur 2 ein Bowdenzug 35 verwendet wird, während bei der Ausführung nach der Figur 3 entsprechend der Figur 1 ein Ausrückhebel 20 verwendet wird, der in eine mit 20' dargestellte Stellung schwenkbar ist. Dieser Ausrückhebel 20 könnte insgesamt aus einem elastisch verformbaren Material, beispielsweise aus Gummi oder einem gummiähnlichen Kunststoff bestehen. Im dargestellten Ausführungsbeispiel ist jedoch nur ein mittlerer Bereich elastisch. Dieser Bereich wird durch ein elastisch verformbares Kupplungsstück 36 hergestellt.

Die ausgefahrene Stellung des Gabelkopfes ist in den Figuren 2 und 3 durch das Bezugszeichen 28' gekennzeichnet.

Die Figur 4 zeigt die allgemein übliche Verzahnung bzw. Profilierung von zwei miteinander in Eingriff stehenden Scheiben. Danach hat jede Scheibe im Querschnitt trapezförmige Zähne, die in entsprechende Lücken der anderen Scheibe eingreifen. Es ergibt sich aus dieser Figur, daß eine Verdrehung des Kupplungsrades 16 gegenüber dem Schneckenrad 14 bei dieser Ausführung nicht möglich ist. Demgegenüber zeigt die Figur 5 die Ausbildung der Profilierungen bzw. der Verzahnungen des Schneckenrades 14 und des Kupplungsrades 16. Danach wird jeder Zahn durch eine, bezogen auf die Drehrichtungen des Schneckenrades 14 und des Kupplungsrades 16, steile Flanke und eine flache Flanke gebildet. Die flache Flanke erstreckt sich über einen wesentlich größeren Winkelbereich als die steile Flanke. Jeder Zahn der Verzahnung ist demzufolge asymmetrisch. Es ergibt sich aus der Figur 5, daß bei einer Drehbewegung des Schneckenrades nach rechts das Kupplungsrad 16 mitgenommen wird, während bei Stillstand des Schneckenrades 14 und Drehung des Kupplungsrades in die gleiche Richtung sich dieses axial verschiebt, so daß die Verzahnungen voreinander herlaufen. Dieser Zustand ergibt sich, wenn der Antrieb ausgerückt wird.

## Patentansprüche

1. Elektromotorischer Möbelantrieb (10) in Form eines Einzel- oder Doppelantriebes, insbesondere für Möbel des Krankenhaus- und/oder des Pflegebereiches mit ein oder zwei jeweils von einem ein Schneckenrad (14) aufweisenden Antrieb antreibbaren Stellspindel (17), auf die jeweils eine Spindelmutter (26) aufgesetzt ist, die mit einem auf eine Welle eines verstellbaren Möbelteiles drehfest aufgesetzten Anlenkhebel zusammenwirkt und bei dem die antriebstechnische Verbindung zwischen dem Abtriebszapfen (13) des Antriebes (12) und der Stellspindel (17) ausrückbar ist, **dadurch gekennzeichnet, daß** das Schneckenrad (14) des Antriebes (12) drehbar auf einem auf der Stellspindel (17) fest angeordneten Führungskörper (15) gelagert ist, auf dem ein Kupplungsrad (16) drehfest jedoch axial verschiebbar angeordnet ist, welches mit dem Schneckenrad (14) in eine Eingriffs- und in eine Außereingriffsstellung bringbar ist.

2. Elektromotorischer Möbelantrieb nach Anspruch 1, **dadurch gekennzeichnet, daß** das Schneckenrad (14) an der dem Kupplungsrad (16) zugewandten Seite eine kreisringförmige Verzahnung (19) und das Kupplungsrad (16) an der zugewandten Seite eine entsprechende Gegenverzahnung aufweist.

3. Elektromotorischer Möbelantrieb nach Anspruch 2, **dadurch gekennzeichnet, daß** die Zähne der Verzahnungen (19) sägezahnförmig gestaltet sind und jeder Zahn aus einer gegenüber den Drehachsen des Schneckenrades (14) und des Kupplungsrades (16) steilen und einer flachen Flanke begrenzt ist.

4. Elektromotorischer Möbelantrieb nach einem oder mehreren der vorhergehenden Ansprüche 1-3, **dadurch gekennzeichnet, daß** das Kupplungsrad (16) mittels eines Federelementes (21) in Eingriff mit dem Schneckenrad (14) steht, und daß die Verzahnungen (19) derart ausgebildet sind, daß bei der Aufwärtsbewegung eines angeschlossenen Möbelteiles das Kupplungsrad (16) durch das Schneckenrad (14) antreibbar und bei der Blockade der Abwärtsbewegung das Kupplungsrad (16) eine relative Drehung gegenüber dem Schneckenrad (14) bei gleichzeitiger axialer Hin- und Herbewegung ausführt.

5. Elektromotorischer Möbelantrieb nach einem oder mehreren der vorhergehenden Ansprüche 1-4, **dadurch gekennzeichnet, daß** das Kupplungsrad (16) am Außenumfang eine Aufnahme für ein Betätigungselement (20) für eine Handhabe oder dergleichen aufweist.

6. Elektromotorischer Möbelantrieb nach einem oder mehreren der vorhergehenden Ansprüche 1-5, **dadurch gekennzeichnet, daß** die Spindel-Spindelmutteranordnung (17, 26) eine nicht selbsthemmende Anordnung ist.

7. Elektromotorischer Möbelantrieb nach einem oder mehreren der vorhergehenden Ansprüche 1-6, **dadurch gekennzeichnet, daß** das Kupplungsrad (16) an der der Spindelmutter (26) abgewandten Seite des Schneckenrades (14) angeordnet ist.

8. Elektromotorischer Möbelantrieb nach einem oder mehreren der vorhergehenden Ansprüche 1-7, **dadurch gekennzeichnet, daß** das Kupplungsrad (16) zur Ausrückbarkeit des Möbelantriebes (10) mittels eines am Möbelantrieb (10) angeordneten Bowdenzuges (35) oder eines Ausrückhebels (20) außer Eingrif mit dem Schneckenrad (14) bringbar ist.

9. Elektromotorischer Möbelantrieb nach Anspruch 8, **dadurch gekennzeichnet, daß** der Ausrückhebel (20) aus einem elastisch verformbaren Material besteht.

10. Elektromotorischer Möbelantrieb nach Anspruch 8, **dadurch gekennzeichnet, daß** der Ausrückhebel (20) wenigstens ein elastisch verformbares Kupplungselement (36) aufweist.

## Claims

1. Electrically actuated drive for furniture (10), in particular for furniture of the hospital- and/or the care sector, which electrically actuated drive for furniture (10) has the form of a single or double drive comprising one or two positioning spindles (17), which positioning spindles (17) can be actuated at any one time by a drive encompassing a worm gear (14), on which positioning spindle/s (17) at any one time is placed a spindle nut (26) operating together with a steering lever, which steering lever is placed in a non-rotatable manner on a shaft of a shiftable furniture part and wherein the technical actuating connection between the actuating peg (13) of the drive (12) and the positioning spindle (17) can be disengaged, **characterised in that** the worm gear (14) of the drive (12) is rotatably mounted on a guiding element (15), which guiding element (15) is fixedly disposed on the positioning spindle (17) and on which is disposed a coupling gear (16) in a non-rotating yet axially displaceable manner, which coupling gear (16) can be brought by means of the worm gear (14) into and out of a meshing position.

2. Electrically actuated drive for furniture according to claim 1, **characterised in that** the side of the worm gear (14) facing the coupling gear (16) encompasses a circular ring-shaped tooth arrangement (19) and the facing side of the coupling gear (16) encompasses a corresponding counter tooth arrangement.

3. Electrically actuated drive for furniture according to claim 2, **characterised in that** the teeth of the tooth arrangement (19) are formed in a saw tooth shape and each tooth is bordered by one upright side and one flat side with regard to the rotating axis of the worm gear (14) and the coupling gear (16).

4. Electrically actuated drive for furniture according to one or more of the preceding claims 1-3, **characterised in that** the coupling gear (16) meshes by means of a spring element (21) with the worm gear (14) and that the tooth arrangement (19) is formed in such a manner that in the case of the upwards movement of an adjoining furniture part the coupling gear (16) can be actuated by the worm gear (14) and in the case of the blockading of the downwards movement of the coupling gear (16) a relative rotation with regard to the worm gear (14) with simultaneous axial backward and forward movement takes place.

5. Electrically actuated drive for furniture according to one or more of the preceding claims 1-4 **characterised in that** the coupling gear (16) encompasses on the outer circumference a recess for an actuating element (20) for manipulating or similar.

6. Electrically actuated drive for furniture according to one or more of the preceding claims 1-5 **characterised in that** the spindle-spindle nut arrangement (17,26) is non-self impeding arrangement.

7. Electrically actuated drive for furniture according to one or more of the preceding claims 1-6 **characterised in that** the coupling gear (16) is disposed on the side of the worm gear (14) facing the spindle nut (26).

8. Electrically actuated drive for furniture according to one or more of the preceding claims 1-7 **characterised in that** for the purpose of the disengagement of the furniture drive (10) by means of a Bowden cable (35) disposed on the furniture drive (10) or a disengaging lever (20) the coupling gear (16) can be released from the meshing arrangement with the worm gear (14).

9. Electrically actuated drive for furniture according to claim 8 **characterised in that** the disengaging lever (20) consists of an elastically deformable material.

10. Electrically actuated drive for furniture according to claim 8 **characterised in that** the disengaging lever (20) consists of at least one elastically deformable coupling element (36).

## Revendications

1. Dispositif électromotorisé d'entraînement pour meuble (10) sous la forme d'un dispositif d'entraînement simple ou double, en particulier pour meubles du domaine hospitalier et/ou des soins comportant une ou deux broches de réglage (17) pouvant être entraînées chacune par un dispositif d'entraînement comportant une roue de vis sans fin (14), sur chacune desquelles est placé un écrou de broche (26) qui coopère avec un levier articulé monté solidairement en rotation sur un arbre d'une partie de meuble réglable, et dans lequel la liaison technique d'entraînement entre le tourillon mené (13) du dispositif d'entraînement (12) et la broche de réglage (17) est débrayable, **caractérisé en ce que** la roue de vis sans fin (14) du dispositif d'entraînement (12) est montée tournante sur un corps de guidage (15) disposé fixement sur la broche de réglage (17), corps de guidage sur lequel est disposée solidairement en rotation mais de manière à pouvoir coulisser axialement une roue d'accouplement (16) qui peut être amenée dans une position d'engagement avec la roue de vis sans fin (14) et dans une position de dégagement.

2. Dispositif électromotorisé d'entraînement pour meuble selon la revendication 1, **caractérisé en ce que** la roue de vis sans fin (14) comporte, sur le côté tourné vers la roue d'accouplement (16), une denture (19) en forme de couronne circulaire, et la roue d'accouplement (16) comporte, sur le côté tourné vers celle-ci, une contre-denture correspondante.

3. Dispositif électromotorisé d'entraînement pour meuble selon la. revendication 2, **caractérisé en ce que** les dents des dentures (19) sont en forme de dents de scie et chaque dent est limitée par un flanc abrupt par rapport aux axes de rotation de la roue de vis sans fin (14) et de la roue d'accouplement (16), et par un flanc plat.

4. Dispositif électromotorisé d'entraînement pour meuble selon une ou plusieurs des revendications 1 à 3 précédentes, **caractérisé en ce que** la roue d'accouplement (16) est en engagement, au moyen d'un élément à ressort (21), avec la roue de vis sans fin (14), et **en ce que** les dentures (19) sont conformées de manière que pendant le mouvement de montée d'une partie de meuble raccordée, la roue d'accouplement (16) peut être entraînée par la roue de vis sans fin (14), et lorsque le mouvement de descente est bloqué, la roue d'accouplement (16) exécute une rotation relative par rapport à la roue de vis sans fin (14) en même temps qu'un mouvement axial en sens alternés.

5. Dispositif électromotorisé d'entraînement pour meuble selon une ou plusieurs des revendications 1 à 4 précédentes, **caractérisé en ce que** la roue d'accouplement (16) présente, sur son pourtour extérieur, un logement pour un élément d'actionnement (20) pour une poignée ou similaire.

6. Dispositif électromotorisé d'entraînement pour meuble selon une ou plusieurs des revendications 1 à 5 précédentes, **caractérisé en ce que** l'agencement broche-écrou de broche (17, 26) constitue un dispositif non auto-bloquant.

7. Dispositif électromotorisé d'entraînement pour meuble selon une ou plusieurs des revendications 1 à 6 précédentes, **caractérisé en ce que** la roue d'accouplement (16) est disposée sur le côté de la roue de vis sans fin (14), tourné à l'opposé de l'écrou de broche (26).

8. Dispositif électromotorisé d'entraînement pour meuble selon une ou plusieurs des revendications 1 à 7 précédentes, **caractérisé en ce que** la roue d'accouplement (16) peut être dégagée de la roue de vis sans fin (14), pour débrayer le dispositif d'entraînement pour meuble (10), au moyen d'un câble Bowden (35) disposé sur le dispositif d'entraînement pour meuble (10), ou d'un levier de débrayage (20).

9. Dispositif électromotorisé d'entraînement pour meuble selon la revendication 8, **caractérisé en ce que** le levier de débrayage (20) est réalisé dans une matière élastiquement déformable.

10. Dispositif électromotorisé d'entraînement pour meuble selon la revendication 8, **caractérisé en ce que** le levier de débrayage (20) comporte au moins un élément d'accouplement (36) déformable élastiquement.
